# EUROPEAN PATENT APPLICATION

(11) **EP 0 602 738 A1**
(43) Date of publication of application: **22.06.1994**
(21) Application number: 93203489.5
(22) Date of filing: 11.12.1993
(51) Int. Cl.: B29D 30/02, B29C 67/18, B60B 5/02

(54) **Process for the manufacture of a tired wheel in synthetic material, especially for a hose winding cart for gardening, and wheel thus obtained**

(30) Priority: 18.12.1992 IT MI922881
(71) Applicant: CLABER S.P.A., I-33080 Fiume Veneto Pordenone (IT)
(72) Inventor: Roman, Gianfranco, I-33087 Pasiano (Pordenone) (IT)
(74) Representative: Mittler, Enrico

(57) **Abstract**

The process comprises the manufacture of a rim (3) with a smooth peripheral wall (9) by moulding a rigid plastic material and the subsequent application of a tread (1) in soft rubber-like material by direct injection of said rubber-like material on said wall.

## Description

The object of the present invention is a process for the manufacture of a tired wheel in synthetic material, especially for a hose winding cart for gardening, and a wheel thus obtained.

The range of application of the present invention is that of the manufacture of wheels in synthetic material for uses such as for example gardening carts. The use is known in this field of synthetic materials such as polypropylene, a polymer obtained from propylene, obtained by moulding; the product thus obtained is a rigid wheel, that can have a set of peripheral blocks to form a tread to ensure a certain grip on the ground, but that has the disadvantages of being, due to its rigidity, noisy, with limited grip on the ground, unsuitable for absorbing shocks.

Attempts at coating wheels in polypropylene with rubber-like materials are also known, so as to overcome the abovementioned problems; but since the two parts do not constitute a single entity, the rubber-like coating acting as a tread, if subjected to particular stresses or in the case of impact, can separate from the rigid polypropylene rim. In fact since polypropylene is not attacked by alkali acids, resins, oils, it cannot be glued to any material; two distinct parts both in polypropylene can be joined only by fusion.

In view of the described state of the art, the object of the present invention is to manufacture a wheel in synthetic material consisting of a rigid rim and a rubber-like tread with qualities of low noisiness, good grip on the ground, in a position of absorbing shocks, such that the rubber-like coating does not ever separate from the rigid rim even in the case of shocks or under particular stress conditions.

According to the invention, such object is attained with a process characterized in that it comprises the manufacture of a rim with a smooth peripheral wall by moulding a rigid plastic material and the subsequent application of a tread in soft rubber-like material by direct injection of said rubber-like material on said wall.

In particular the process according to the invention provides for the use of a polyolefinic elastomeric material, such as the one known in the trade as MEGOL type IA80C/1UG, injected at a temperature of about 230°C and an initial pressure of 820 kg/cm², later lowered to 480 kg/cm², so that it is joined by fusion to the rigid polypropylene.

It has been possible to observe that a wheel is thus obtained that comprises a rigid rim and a soft tread that does not ever separate from the rim.

In this way the wheel obtained does not have the mentioned problems, since the qualities of quietness during operations and the feeling of softness, grip on the ground and absorption of shocks combine with the advantage that the rigid rim and the rubber-like tread constitute a single entity that cannot be separated even if subjected to stresses or shocks.

These and other features and advantages of the present invention will be made evident by the following detailed description of an embodiment thereof illustrated as a non-limiting example in the enclosed drawings, wherein:

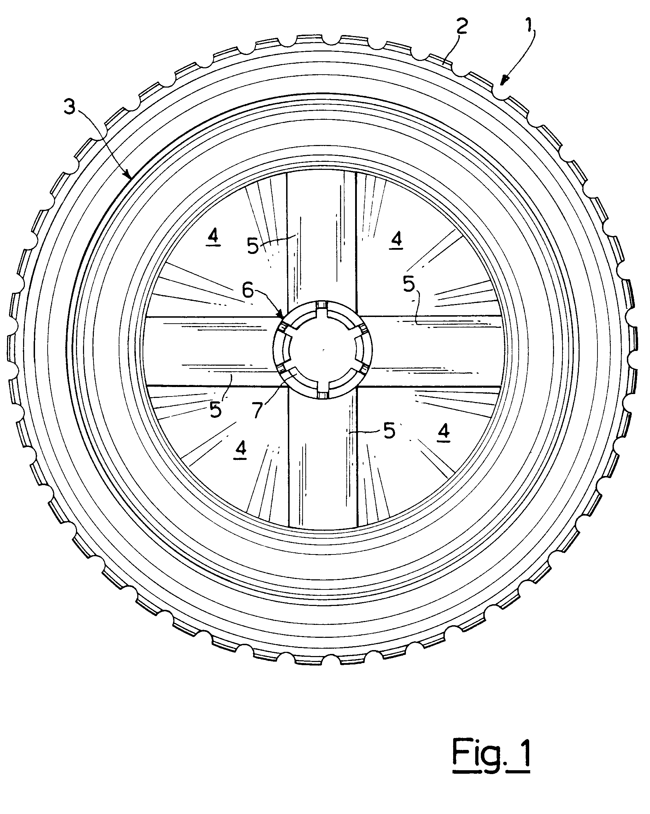

Fig. 1 shows a front view of a wheel according to the invention;

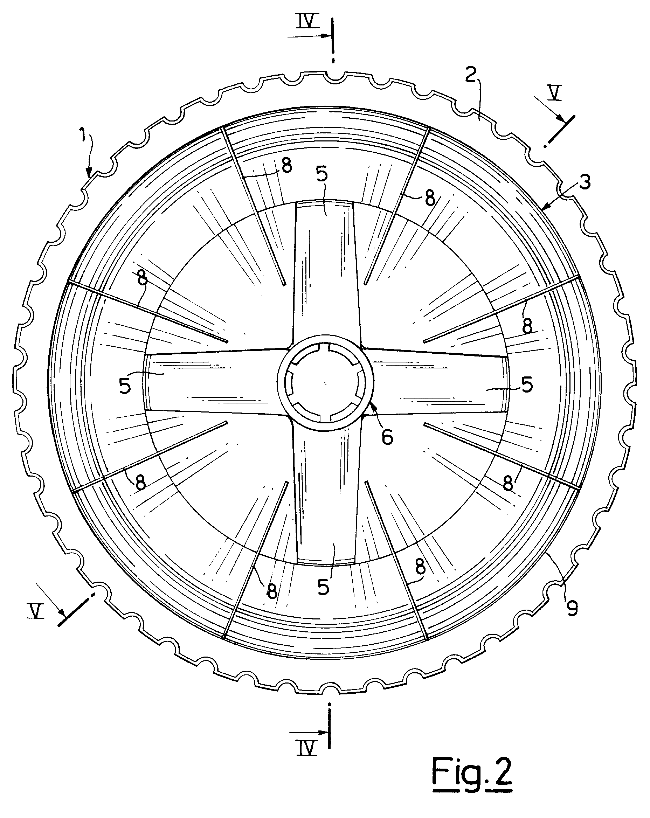

Fig. 2 shows a view of said wheel from the rear;

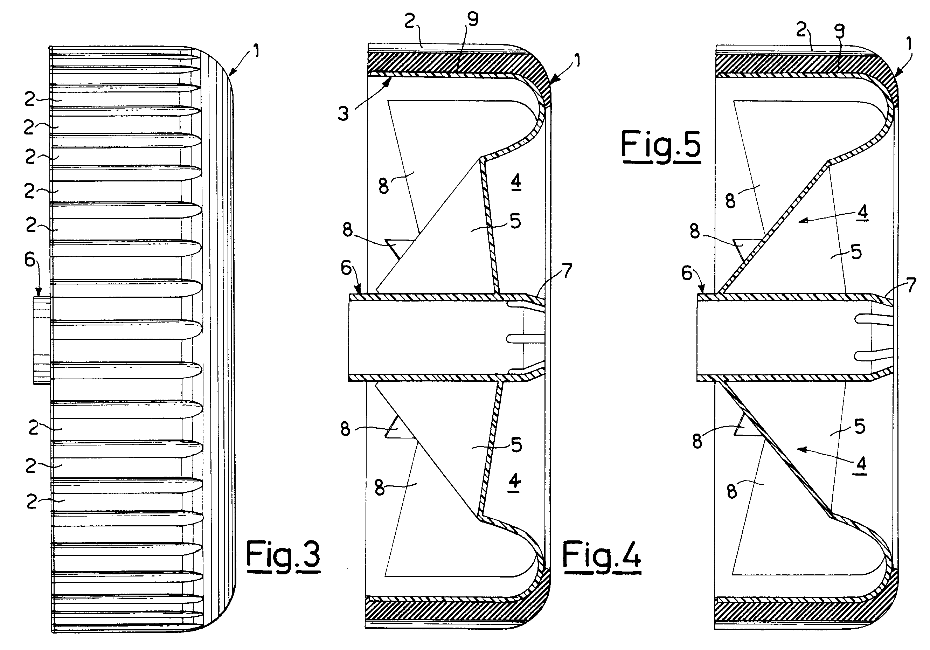

Fig. 3 shows a side view of said wheel;
Fig. 4 shows a sectional view of said wheel taken along the line IV-IV of Fig. 2;
Fig. 5 shows a sectional view of said wheel taken along the line V-V of Fig. 2.

With reference to the drawings, the wheel comprises a tread in a rubber-like material 1 provided with a set of blocks 2 so as to ensure a better grip on the ground and is fastened on a rigid rim 3 having a smooth peripheral wall 9, as can be seen from Fig.s 4 and 5; the rigid rim 3 has a concavity 4 in its front part, divided into four quadrants by four ribs 5 forming 90° angles one with the other; at the centre of the rigid rim 3, fastened to the ribs 5, a hollow cylinder 6 is seen that ends in its front part with a plurality of elastically deformable tangs 7 suitable to allow the coupling of the rim on a hub. On the rear part of the rigid rim 3, eight ribs 8, narrower that the ribs 5, connect the internal part of the lateral wall 9 of the rigid rim 3 with the rear part of the concavity 4 of said rim, so as to attribute a greater rigidity to the structure.

The process about to be described is put into practice for the manufacture of the abovementioned wheel: according to a traditional process, the rigid rim 3 is first moulded in polypropylene; the die is then opened and the rim 3 is extracted, that may optionally be left to cool down until it reaches room temperature. Said rim 3 is then placed in a new die for the purpose of being coated with a rubber-like material; this is a thermoplastic rubber (semifluid polyolefinic elastomer), constituted by fluidified granules, for example of the type identified as MEGOL type IA80C/1UG and produced by the API S.p.A. company with headquarters in Mussolente (Vicenza), having among others the advantage of being toxicologically outstanding; such rubber-like material is injected into the die holding the rigid rim 3, for example at a superinjection temperature of 230°C, and at an initial pressure of 820 kg/cm², that is subsequently reduced to 480 kg/cm²; in this way said rubber-like material adheres by molecular fusion to the rigid rim without damaging it, forming a tread 1 that constitutes a single entity with the rim 3 without any possibility of separation during use.

## Claims

1. Process for the manufacture of a tired wheel in synthetic material, characterized in that it comprises the manufacture of a rim (3) with a smooth peripheral wall (9) by moulding a rigid plastic material and the subsequent application of a tread (1) in soft rubber-like material by direct injection of said rubber-like material on said wall.

2. Process according to claim 1, characterized in that said rigid rim (3) is obtained by polypropylene moulding.

3. Process according to claims 1 or 2, characterized in that said tread (1) is constituted by a polyolefinic elastomer.

4. Process according to claim 3, characterized in that said polyolefinic elastomer is of the type indicated commercially as MEGOL IA80C/1UG.

5. Process according to claim 3, characterized in that said direct injection of elastomer is made at a temperature of about 230°C and an initial pressure of 820 kg/cm², later lowered to 480 kg/cm².

6. Wheel manufactured with the process according to claim 1, characterized in that it comprises a rim (3) in rigid plastic material and a tread (1) of soft rubber-like material constituting a single entity with the abovementioned rim (3).

7. Wheel according to claim 6, characterized in that the rim (3) is made of polypropylene.

8. Wheel according to claims 6 or 7, characterized in that the rim (3) is constituted by a polyolefinic elastomer.
